# EUROPEAN PATENT APPLICATION

(11) **EP 4 773 651 A1**
(43) Date of publication of application: **08.07.2026**
(21) Application number: 23950097.8
(22) Date of filing: 29.08.2023
(51) Int. Cl.: H04W 24/02

(54) **COMMUNICATION METHOD, TERMINAL, NETWORK DEVICE, SYSTEM, AND MEDIUM**

(71) Applicant: Beijing Xiaomi Mobile Software Co., Ltd., Beijing 100085 (CN)
(72) Inventor: HU, Ziquan, Beijing 100085 (CN)
(74) Representative: Dehns Germany Partnerschaft mbB
(86) International application number: PCT/CN2023/115613
(87) International publication number: WO 2025/043505

(57) **Abstract**

The present disclosure provides a communication method, a terminal, a network device, a system, and a medium. The method comprises: sending first information, wherein the first information is used for indicating whether a terminal supports a first capability, and the first capability is a capability of performing measurement on the basis of an effective measurement window (EMW). In the embodiments of the present disclosure, a terminal can send first information to a network device so as to report whether the terminal supports the capability of performing measurement on the basis of an EMW, so that the network device can obtain the capability of the terminal, and performs reasonable resource configuration on the basis of the capability of the terminal.

## Description

### TECHNICAL FIELD

This disclosure relates to the field of communication technology, and in particular to a communication method, a terminal, a network device, a system and a medium.

### BACKGROUND

A network device can configure a measurement gap (MG) for a terminal, thereby allowing the terminal to perform, according to the measurement gap, a mobility measurement on one or more measurement objects (MOs) configured by the network device.

### SUMMARY

A relevant capability of the terminal is to be introduced in measurement scenarios where no measurement gap is required.

This disclosure provides a communication method, a terminal, a network device, a system and a medium.

In a first aspect, embodiments of the present disclosure provide a communication method, including:
sending first information, where the first information indicates whether a terminal supports a first capability, and the first capability is a capability of performing a measurement based on an Effective Measurement Window (EMW).

In a second aspect, embodiments of the present disclosure provide a communication method, including:
receiving first information, where the first information indicates whether a terminal supports a first capability, and the first capability is a capability of performing a measurement based on an Effective Measurement Window (EMW).

In a third aspect, embodiments of the present disclosure provide a communication method, including:
sending, by a terminal to a network device, first information, where the first information indicates whether a terminal supports a first capability, and the first capability is a capability of performing a measurement based on an Effective Measurement Window (EMW); and
receiving, by the network device, the first information.

In a fourth aspect, embodiments of the present disclosure provide a terminal, including:
a transceiving module, configured to send first information, where the first information indicates whether a terminal supports a first capability, and the first capability is a capability of performing a measurement based on an Effective Measurement Window (EMW).

In a fifth aspect, embodiments of the present disclosure provide a network device, including:
a transceiving module, configured to receive first information, where the first information indicates whether a terminal supports a first capability, and the first capability is a capability of performing a measurement based on an Effective Measurement Window (EMW).

In a sixth aspect, embodiments of the present disclosure provide a terminal, including:
one or more processors;
where the terminal is configured to perform the communication method provided in the first aspect above.

In a seventh aspect, embodiments of the present disclosure provide a network device, including:
one or more processors;
where the network device is configured to perform the communication method provided in the second aspect above.

In an eighth aspect, embodiments of the present disclosure provide a communication system, including a terminal and a network device, where the terminal is configured to implement the communication method provided in the first aspect above, and the network device is configured to implement the communication method provided in the second aspect above.

In a ninth aspect embodiments of the present disclosure provide a storage medium, where the storage medium stores instructions that, when operated on the communication device, cause the communication device to perform the method provided in the first aspect above, or the method provided in the second aspect above.

In some embodiments of the present disclosure, the terminal may send the first information to the network device to report whether the terminal supports the capability of performing a measurement based on an EMW, thereby enabling the network device to determine the capability of the terminal and making reasonable resource allocation based on the capability of the terminal.

### BRIEF DESCRIPTION OF THE DRAWINGS

To more clearly illustrate the technical solutions in the embodiments of the present disclosure, the accompanying drawings required for the description of the embodiments are introduced below. The following drawings are only some embodiments of the present disclosure and do not impose specific limitations on the protection scope of this disclosure.
FIG. 1 is an exemplary architectural diagram of a communication system according to an embodiment of the present disclosure.
FIG. 2a to FIG. 2b are exemplary interactive diagrams of the methods according to an embodiment of the present disclosure.
FIG. 2c is a schematic diagram of an NCSG pattern according to an embodiment of the present disclosure.
FIG. 3a to FIG. 3d are schematic flowcharts of a method performed by a terminal according to an embodiment of the present disclosure.
FIG. 4a to FIG. 4d are schematic flowcharts of a method performed by a network device according to an embodiment of the present disclosure.
FIG.5 is an interactive schematic diagram of a communication method according to an embodiment of the present disclosure.
FIG. 6 is an interactive schematic diagram of a communication method according to an embodiment of the present disclosure.
FIG. 7a is a schematic structural diagram of a terminal according to an embodiment of the present disclosure.
FIG. 7b is a schematic structural diagram of a network device according to an embodiment of the present disclosure.
FIG. 8a is a schematic diagram of a communication device according to an embodiment of the present disclosure.
FIG. 8b is a schematic diagram of a communication device according to an embodiment of the present disclosure.

### DETAILED DESCRIPTION

This disclosure provides a communication method, a terminal, a network device, a system, and a medium.

In a first aspect, embodiments of the present disclosure provide a communication method, including:
sending first information, where the first information indicates whether a terminal supports a first capability, and the first capability is a capability of performing a measurement based on an Effective Measurement Window (EMW).

In the above embodiments, the terminal may send the first information to the network device to report whether the terminal supports the capability of performing a measurement based on an EMW, thereby enabling the network device to determine the capability of the terminal and making reasonable resource allocation based on the capability of the terminal.

Based on some embodiments of the first aspect, in some embodiments, the method further includes:
sending second information, where the second information indicates that the terminal supports a Network Controlled Small Gap (NCSG) capability.

In the above embodiments, the terminal may send the second information to indicate support for an NCSG capability, thereby reporting the first information based on support for the NCSG capability, providing a new capability reference for the NCSG scenario, and facilitating reasonable EMW configuration for network devices in this scenario.

Based on some embodiments of the first aspect, in some embodiments, the method further includes:
sending third information, where the third information indicates that the terminal supports one of the following:
a measurement capability requiring neither a measurement gap nor NCSG; or
a measurement capability requiring NCSG.

In the above embodiments, when the terminal supports the NCSG capability, the terminal can further report the corresponding measurement capability based on reporting the third information, thereby enabling the terminal to report the first information reasonably at an appropriate time, and facilitating the network device to make appropriate measurement configuration.

Based on some embodiments of the first aspect, in some embodiments, the method further includes:
receiving fourth information, where the terminal supports the first capability, and the fourth information indicates a parameter of the EMW configured by a network device.

In the above embodiments, when the terminal supports the first capability, the terminal can receive the fourth information sent by the network device, thereby determining the relevant parameter configuration of the EMW and facilitating the terminal to determine the time-frequency domain location for measurement.

Based on some embodiments of the first aspect, in some embodiments, the parameter of the EMW includes at least one of the following:
a periodicity of the EMW;
a duration of the EMW;
a time domain offset of the EMW.

In the above embodiments, the relevant time-domain parameter of the EMW is illustrated. Based on the above parameter, the terminal and the network device can possess a same understanding of the time-domain location of EMW, thereby facilitating the terminal to perform a measurement at a reasonable time-domain location.

Based on some embodiments of the first aspect, in some embodiments, the method further includes:
performing the measurement based on the EMW, where the terminal supports the first capability.

In the above embodiments, when the terminal supports the first capability, the terminal can perform the measurement based on the EMW, thereby enabling, in a scenario without a measurement gap, the terminal and network device to possess a consistent understanding of the time-domain location for measurement of the terminal, and facilitating reasonable interaction between the terminal and the network device during the measurement process or outside the measurement process.

Based on some embodiments of the first aspect, in some embodiments, the method further includes:
performing the measurement based on a specific reference signal, where the terminal does not support the first capability.

In the above embodiments, when the terminal does not support the first capability, the terminal can perform the measurement based on a specific reference signal, thereby enabling the terminal to perform the measurement at a reasonable time domain location even when the terminal does not support the relevant capability, and facilitating reasonable interaction between the terminal and the network device during the measurement process or outside the measurement process.

Based on some embodiments of the first aspect, in some embodiments, the measurement based on the EMW is a measurement without a measurement gap.

In the above embodiments, the applicable measurement scenario for the capability reported by the terminal is illustrated, along with the relevant capability reported by the terminal for this scenario, thereby providing a reasonable configuration reference for the network device.

In a second aspect, embodiments of the present disclosure provide a communication method, including:
receiving first information, where the first information indicates whether a terminal supports a first capability, and the first capability is a capability of performing a measurement based on an Effective Measurement Window (EMW).

In the above embodiments, the network device receives first information sent by the terminal to determine whether the terminal supports the capability of performing a measurement based on an EMW, thereby enabling the network device to determine the capability of the terminal and making reasonable resource allocation based on the capability of the terminal.

Based on some embodiments of the second aspect, in some embodiments, the method further includes: receiving second information, where the second information indicates that the terminal supports an NCSG capability.

Based on some embodiments of the second aspect, in some embodiments, the method further includes:
receiving third information, where the third information indicates that the terminal supports one of the following:
a measurement capability requiring neither a measurement gap nor NCSG; or
a measurement capability requiring NCSG.

Based on some embodiments of the second aspect, in some embodiments, the method further includes:
sending fourth information, where the terminal supports the first capability, and the fourth information indicates a parameter of the EMW configured by a network device.

Based on some embodiments of the second aspect, in some embodiments,
the parameter of the EMW includes at least one of the following:
a periodicity of the EMW;
a duration of the EMW;
a time domain offset of the EMW.

Based on some embodiments of the second aspect, in some embodiments, the method further includes:
not sending fourth information, where the terminal does not support the first capability, and the fourth information indicates a parameter of the EMW configured by a network device.

Based on some embodiments of the second aspect, in some embodiments, the measurement based on the EMW and of the terminal, is a measurement without a measurement gap.

In a third aspect, embodiments of the present disclosure provide a communication method, including:
sending, by a terminal to a network device, first information, where the first information indicates whether a terminal supports a first capability, and the first capability is a capability of performing a measurement based on an Effective Measurement Window (EMW); and
receiving, by the network device, the first information.

In a fourth aspect, embodiments of the present disclosure provide a terminal, including:
a transceiving module, configured to send first information, where the first information indicates whether a terminal supports a first capability, and the first capability is a capability of performing a measurement based on an Effective Measurement Window (EMW).

In a fifth aspect, embodiments of the present disclosure provide a network device, including:
a transceiving module, configured to receive first information, where the first information indicates whether a terminal supports a first capability, and the first capability is a capability of performing a measurement based on an Effective Measurement Window (EMW).

In a sixth aspect, embodiments of the present disclosure provide a terminal, including:
one or more processors;
where the terminal is configured to perform the communication method provided in the first aspect above.

In a seventh aspect, embodiments of the present disclosure provide a network device, including:
one or more processors;
where the network device is configured to perform the communication method provided in the second aspect above.

In an eighth aspect, embodiments of the present disclosure provide a communication system, including a terminal and a network device, where the terminal is configured to implement the communication method provided in the first aspect above, and the network device is configured to implement the communication method provided in the second aspect above.

In a ninth aspect embodiments of the present disclosure provide a storage medium, where the storage medium stores instructions that, when operated on the communication device, cause the communication device to perform the method provided in the first aspect above, or the method provided in the second aspect above.

In a tenth aspect, this disclosure provides a program product that, when executed by a communication device, causes the communication device to perform the method as described in alternative implementations of the first and second aspects.

In an eleventh aspect, this disclosure provides a computer program that, when run on a computer, causes the computer to perform the methods described in alternative implementations of the first and second aspects.

In a twelfth aspect, embodiments of the present disclosure provide a chip or chip system. The chip or chip system includes processing circuitry configured to perform the methods described according to alternative implementations of the first and second aspects above.

It is understood that the aforementioned terminal, network device, communication system, storage medium, program product, computer program, chip, or chip system are used to perform the methods described in the embodiments of the present disclosure. Therefore, the beneficial effects achieved can be referred to in the beneficial effects of corresponding methods, and are not repeated here.

Embodiments of the present disclosure provide a communication method, a terminal, a network device, a system and a medium.

In some embodiments, the terms "communication method", "information processing method", "communication processing method", and the like may be used interchangeably; similarly, the terms "communication device", "information processing device", "communication processing device" and the like may be used interchangeably, and the terms "information processing system", "communication system" and the like may also be used interchangeably.

The embodiments disclosed herein are not exhaustive, but merely illustrative of some embodiments, and are not intended to limit the protection scope of this disclosure. Where there is no contradiction, each step in a particular embodiment can be implemented as an independent embodiment, and the steps can be arbitrarily combined. For example, a solution obtained by removing some steps in a particular embodiment can also be implemented as an independent embodiment, and the order of the steps in a particular embodiment can be arbitrarily changed. Furthermore, the optional implementation manners in a particular embodiment can be arbitrarily combined; moreover, various embodiments can be arbitrarily combined. For example, some or all steps of different embodiments can be arbitrarily combined, and one embodiment can be arbitrarily combined with alternative implementation manners of other embodiments.

In the various embodiments of the present disclosure, the terminology and/or descriptions between embodiments may be consistent, may be referenced to each other in the absence of specific descriptions and logical conflicts, and technical features in different embodiments may be combined according to their inherent logical relationships to form new embodiments.

Terms used in embodiments of the present disclosure are for the purpose of describing particular embodiments only and is not intended to limit this disclosure.

In some embodiments of the disclosure, unless otherwise stated, elements expressed in the singular form, such as "a", "an", "the above", "the aforementioned", "the", "this", etc., can mean "one and only one", or "one or more", "at least one", etc. For example, when using articles such as "a", "an", "the", etc. in translation, the noun following the article can be understood as either a singular or a plural expression.

In embodiments of the present disclosure, "a plurality of/multiple" refers to two or more.

In some embodiments, "at least one (at least one item, at least one of)", "one or more", "a plurality of" and "multiple" may be used interchangeably.

In some embodiments, phrases such as "at least one of A or B", "A and/or B", "A in one case and B in another", and "in response to one case A and in response to another case B" may include the following technical solutions depending on the situation. In some embodiments, A (A is performed independently of B); in some embodiments, B (B is performed independently of A); in some embodiments, execution is selected from A and B (A and B are selectively executed); in some embodiments, A and B (both A and B are performed). The same principle applies when there are many branches such as A, B, and C.

In some embodiments, "A or B" may include the following technical solutions depending on the situation. In some embodiments, A (A is performed independently of B); in some embodiments, B (B is performed independently of A); in some embodiments, execution is selected from A and B (A and B are selectively executed). The same principle applies when there are many branches such as A, B, and C.

In some embodiments of the disclosure, prefixes such as "first" and "second" are used only to distinguish different descriptive objects and do not limit the position, order, priority, quantity, or content of different descriptive objects. The description of the descriptive objects refers to the context of the claims or embodiments and should not be unduly limited by the use of prefixes. For example, if the descriptive object is a "field", the ordinal numbers preceding "field" in "first field" and "second field" do not restrict the position or order of the "fields", and "first" and "second" do not restrict whether their modified "fields" are in the same message. The order of "first field" and "second field" is unrestricted. As another example, if the descriptive object is "rank", the ordinal numbers preceding "rank" in "first rank" and "second rank" do not restrict the priority between "ranks". For example, the number of described objects is not limited by ordinal numbers and can be one or more. For example, the number of "device(s)" in "first device" can be one or more. In addition, objects modified by different prefixes can be the same or different. For example, if the object being described is "device", then "first device" and "second device" can be the same device or different devices, and their types can be the same or different. If the object being described is "information", then "first information" and "second information" can be the same information or different information, and their content can be the same or different.

In some embodiments, "including A", "containing A", "indicating A", and "carrying A", can be interpreted as directly carrying A or indirectly indicating A.

In some embodiments, terms such as "time/frequency" and "time-frequency domain" refer to the time domain and/or frequency domain.

In some embodiments, terms such as "in response to", "in response to determination of", "in the case of", "when", "while", "at that time", "in case", "if", etc., may be replaced by each other.

In some embodiments, the terms "greater than", "greater than or equal to", "not less than", "more than", "more than or equal to", "no less than", "higher than", "higher than or equal to", "not lower than", and "above" can be used interchangeably. Similarly, the terms "less than", "less than or equal to", "not greater than", "fewer than", "fewer than or equal to", "no more than", "lower than", "lower than or equal to", "not higher than", and "below" can be used interchangeably.

In some embodiments, the terms "apparatus" and "device" can be interpreted as either physical or virtual, and their names are not limited to those recorded in the embodiments. In some cases, they can also be understood as "equipment", "device", "circuit", "network element", "node", "function", "unit", "section", "system", "network", "chip", "chip system", "entity", "subject", etc.

In some embodiments, "network" can be interpreted as the devices included in the network, such as access network devices, core network devices, etc.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, an access network device, a core network device, or a network device may be replaced by a terminal. For example, the embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In such cases, the terminal may be structured to have all or part of the functions of the access network device. Furthermore, terms such as "uplink" and "downlink" may be replaced by terms corresponding to inter-terminal communication (e.g., "side"). For example, an uplink channel or a downlink channel may be replaced by a sidelink channel, and an uplink or downlink may be replaced by a sidelink.

In some embodiments, a terminal may be replaced by an access network device, a core network device, or a network device. In such cases, the access network device, core network device, or network device may also be configured to possess all or part of the functions of the terminal.

In some embodiments, obtaining data, information, etc. shall comply with the laws and regulations of the country where it is located.

In some embodiments, data, information, etc. can be obtained after obtaining the user's consent.

Additionally, each element, each row, or each column in the tables of the embodiments disclosed herein can be implemented as an independent embodiment, and any combination of elements, rows, or columns can also be implemented as an independent embodiment.

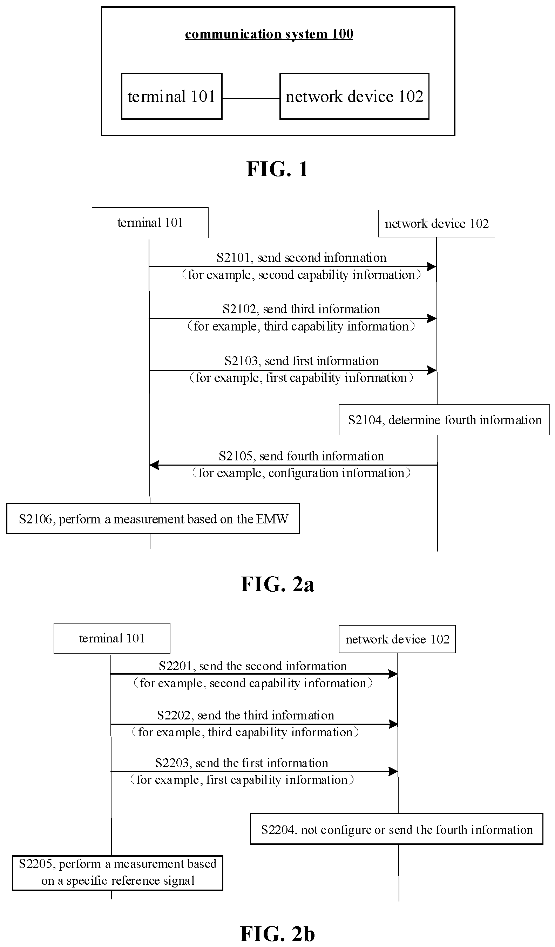

FIG. 1 is a schematic architectural diagram illustrating a communication system according to an embodiment of the present disclosure.

As shown in FIG. 1, the communication system 100 includes a terminal 101 and a network device 102.

In some embodiments, the terminal 101 may include, for example, at least one of a mobile phone, wearable device, Internet of Things (IoT) device, vehicle with communication capabilities, smart car, tablet (Pad), computer with wireless transceiver function, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home, but is not limited thereto.

In some embodiments, the network device 102 may include at least one of an access network device and a core network device.

In some embodiments, the access network device may be a node or device that connects a terminal to a wireless network. The access network device may include at least one of an evolved Node B (eNB), a next-generation eNB (ng-eNB), a next-generation Node B (gNB), a Node B (NB), a Home Node B (HNB), a Home eNB (HeNB), a radio backhaul device, a radio network controller (RNC), a base station transceiver station (BTS), a baseband unit (BBU), or a mobile switching center in the 5G communication system; or a base station, an OpenRAN, or a CloudRAN in the 6G communication system; or a base station in other communication systems; or an access node in a wireless fidelity (Wi-Fi) system, but is not limited thereto.

In some embodiments, the technical solutions disclosed herein can be applied to the OpenRAN architecture. In such cases, the interfaces between or within the access network devices involved in the embodiments of the present disclosure can be replaced with internal interfaces of OpenRAN. The processes and information exchanges between these internal interfaces can be implemented through software or programs.

In some embodiments, the access network device can be composed of a central unit (CU) and a distributed unit (DU), where the CU can also be referred to as a control unit. In the CU-DU structure, the protocol layers of the access network device are split, with the functions of some protocol layers being centralized in the CU for control, and functions of part or all of the remaining protocol layers being distributed in the DU, where DU is controlled by the CU. The embodiments are not limited thereto.

In some embodiments, the core network device can be a single device including one or more network elements, or it can be multiple devices or device clusters, each including all or part of the aforementioned one or more network elements. The network elements can be virtual or physical. The core network, for example, includes at least one of the Evolved Packet Core (EPC), 5G Core Network (5GCN), and Next Generation Core (NGC).

It is understandable that the communication system described in the embodiments of the present disclosure is for a clearer illustration of the technical solutions provided by the embodiments of the present disclosure and does not constitute a limitation on the technical solutions provided by the embodiments of the present disclosure. As known to those of ordinary skill in the art, with the evolution of system architectures and the emergence of new service scenarios, the technical solutions provided by the embodiments of the present disclosure are also applicable to similar technical problems.

The following embodiments of the present disclosure may be applied to the communication system 100 shown in FIG. 1 or part of its entities, but are not limited thereto. The entities illustrated in FIG. 1 are exemplary; the communication system may include all or part of the entities in FIG. 1, and may also include other entities not shown in FIG. 1. The number and form of the entities are arbitrary, and the connection relationships among the entities are illustrative. The entities may be unconnected or connected, and such connections may be established in any manner, either directly or indirectly, and may be wired or wireless.

The various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New Radio Access Technology (RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X), systems using other instruction processing modes, and next-generation systems expanded based on them. In addition, multiple systems can also be combined (for example, the combination of LTE or LTE-A and 5G, etc.) for application.

In the embodiments of the present disclosure, that the terminal 101 supports an inter-RAT measurement without a measurement gap may include the following two scenarios: the terminal 101 has an idle radio frequency (RF) chain available for measurement, or the reference signals of the LTE neighbor cells to be measured are fully contained within the active bandwidth part (BWP) of the terminal 101. For both of the above scenarios, however, a measurement parameter or a related capability is redefined associated with the terminal 101.

FIG. 2a is an interactive schematic diagram of a communication method according to an embodiment of the present disclosure. As shown in FIG. 2a, embodiments of the present disclosure relate to a communication method, the method including the following step(s).

In step S2101, a terminal 101 sends second information to a network device 102.

In some embodiments, the second information indicates that the terminal 101 supports a Network Controlled Small Gap (NCSG) capability.

Optionally, the second information may be capability information or indication information, etc. For example, the second information is second capability information.

In some embodiments, the second information may indicate whether the terminal 101 supports an NCSG capability.

Optionally, in the following examples, the second information can indicate that the terminal 101 supports the NCSG capability.

In one example, the terminal 101 may report the second information in which the content "support" is included, or the terminal 101 may report the second information in which an enumeration value of a first field is "support", thereby indicating, based on the presence of "support" in the content of the second information, that the NCSG capability is supported. The first field indicates whether the NCSG capability is supported.

In another example, the second information may occupy 1 bit, and the terminal 101 may indicate, based on reporting the value of this 1 bit as a first value, that the NCSG capability is supported. Alternatively, the second information may occupy multiple bits, and the terminal 101 may indicate, based on reporting the 1 bit set in the second information as a first value, that the NCSG capability is supported. This set 1 bit indicates whether the NCSG capability is supported.

Alternatively, in the following examples, the second information can indicate that the terminal 101 does not support the NCSG capability.

In one example, the terminal 101 can report the second information in which the first field is not contained (i.e., the first field is absent), thereby indicating that terminal 101 does not support the NCSG capability. Alternatively, the second information from the terminal 101 contains the content "nonsupport"; or the terminal 101 reports the second information in which the enumeration value of the first field is "nonsupport", thereby indicating that the NCSG capability is not supported based on the presence of "nonsupport" in the content of the second information. The first field indicates whether the NCSG capability is supported.

In another example, the second information may occupy 1 bit, and the terminal 101 may indicate, based on reporting the value of this 1 bit as a second value, that the NCSG capability is supported. Alternatively, the second information may occupy multiple bits, and the terminal 101 may indicate, based on reporting the 1 bit set in the second information as a first value, that the NCSG capability is not supported. The set 1 bit indicates whether the NCSG capability is supported.

Optionally, the first value in the above example can be 1, and the second value can be 0.

In some embodiments, when the terminal 101 supports the NCSG capability, the terminal 101 may possess an idle RF link for measurement, thereby supporting measurement without a measurement gap.

Optionally, the terminal 101 includes an active RF link and an idle RF link. On the active RF link, the terminal 101 communicates with the NR cell. On the idle RF link, the terminal 101 performs an inter-RAT LTE neighbor cell measurement.

Optionally, the cell specific reference signal (CRS) of LTE neighbor cell may be fully included in the active BWP of the terminal 101.

In some embodiments, the network device 102 receives the second information sent by the terminal 101 and thus determines whether the terminal 101 supports NCSG capability.

In step S2102, the terminal 101 sends third information to the network device 102.

In some embodiments, the third information indicates that the terminal supports one of the following:
a measurement capability requiring neither a measurement gap nor NCSG (nogap-noncsg); or
a measurement capability requiring NCSG (ncsg).

Optionally, the third information may be capability information or indication information, etc. For example, the third information is third capability information. For example, the terminal 101 sends the third capability information NeedForGapNCSG-InfoEUTRA-r17, thereby reporting the specific NCSG capability.

Optionally, the terminal 101 may report support for nogap-noncsg based on NeedForGapNCSG-InfoEUTRA-r17, thereby indicating that it supports the measurement without a measurement gap (no-gap) and without interruption.

Optionally, the terminal 101 may report support for ncsg based on NeedForGapNCSG-InfoEUTRA-r17, thereby indicating that it supports the measurement without a measurement gap but with interruption. Here, the interruption of ncsg corresponds to the visible interrupt length (VIL) of ncsg, and its interruption duration is shorter than the interruption duration of a regular measurement gap.

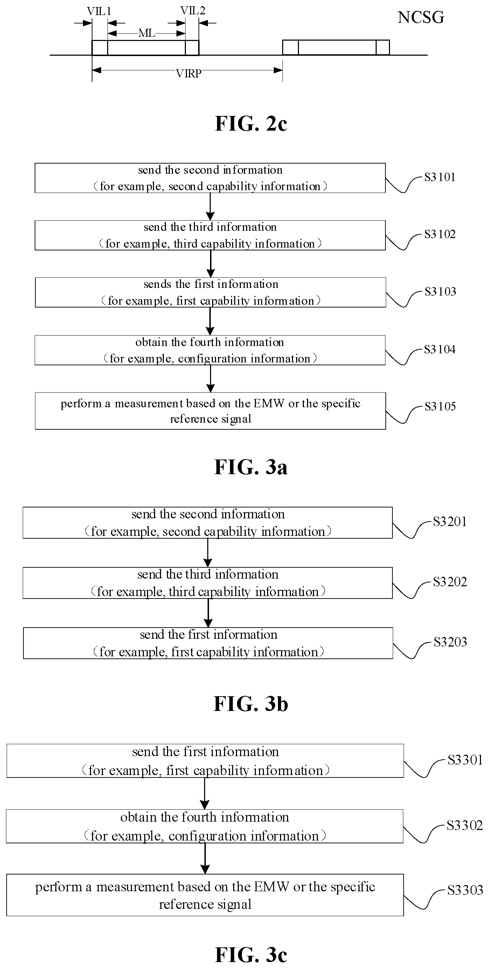

In one example, referring to FIG. 2c, the NCSG pattern includes VIL1, measurement length (ML) and VIL2. In some embodiments, VIL1 and VIL2 are allocated for RF retuning, during which the serving cell experiences an interruption. This interruption duration is short, thereby making a minimal impact on communication throughput. ML is the duration or window used for measurement.

In some embodiments, in scenarios where the terminal 101 supports the NCSG capability, the terminal 101 may possess the idle RF link for measurement, thereby supporting measurement without a measurement gap. For example, in this embodiment of the disclosure, the measurement based on an EMW is without measurement gap.

In some embodiments, when the terminal 101 supports the NCSG capability, it may send third information.

In some embodiments, terminal 101 may indirectly indicate support for NCSG capability based on sending third information. In this case, step S2101 may be omitted, which helps to save signaling resources.

In some embodiments, the network device 102 receives the third information sent by the terminal, thereby determining that the terminal 101 supports nogap-noncsg or ncsg.

In step S2103, the terminal 101 sends first information to the network device 102.

In some embodiments, the first information indicates whether the terminal supports a first capability, and the first capability is a capability of performing a measurement based on an Effective Measurement Window (EMW).

Optionally, the EMW is a measurement window configured by the network device 102, which can indicate the time-domain position for the terminal 101 to perform an inter-RAT LTE measurement or indicate the time-domain position for the network device 102 to perform scheduling.

Optionally, the first information may be capability information or indication information. For example, the terminal 101 sends the first capability information EMW capability-r18 or capability on EMW, thereby reporting whether it supports the first capability.

In some examples, the terminal 101 may report the first information in which the content "support" is included, or the terminal 101 may report the first information in which an enumeration value of a second field is "support", thereby indicating that the first capability is supported based on reporting the first information that includes "support". Alternatively, the terminal 101 may report support for the first capability based on reporting first information in which the value of a certain information field is a predefined value, or the value of a certain bit in the first information is a set value. Optionally, the information field may include one or more bits. Optionally, taking an example where the information field includes one bit, or using one bit in the first information to indicate whether the first capability is supported, the description may be as follows: when the value of this one bit is the first value, it indicates that terminal 101 supports the first capability. Optionally, the first value may be 1.

In some embodiments, when the terminal 101 supports the NCSG capability, the terminal 101 may send the first information. In one example, the terminal 101 sends the first information after sending the second information, or the terminal 101 simultaneously sends, based on the same capability information, both the second information and first information. In another example, terminal 101 sends the first information after sending the second information and the third information, where the terminal 101 may simultaneously send, based on the same capability information, both the second information and the third information, or the terminal may simultaneously send, based on the same capability information, both the third information and the first information, or the terminal may simultaneously send, based on the same capability information, the second information, the third information, and the first information.

In some embodiments, when the terminal 101 supports nogap-noncsg or ncsg, the terminal 101 may send the first information. For example, the terminal may indirectly indicate, based on reporting the third information, the NCSG capability is supported. In one example, the terminal may not send the second information, but send the first information after sending the third information; or the terminal may simultaneously send, based on the same capability information, both the third information and the first information.

In some embodiments, when the terminal 101 supports the first capability, it indicates that terminal 101 supports performing a measurement without a measurement gap during the EMW.

In some embodiments, when terminal 101 does not support the first capability, it indicates that terminal 101 does not support performing a measurement without a measurement gap during the EMW.

In some embodiments, the network device 102 receives the first information sent by the terminal 101 to determine whether the terminal 101 supports the first capability, thus the network device 102 can determine whether to perform EMW configuration or whether to send EMW configuration information.

In step S2104, the network device 102 determines fourth information.

In some embodiments, the fourth information indicates a parameter of the EMW configured by the network device 102.

In some embodiments, the fourth information may be configuration information or indication information. For example, the network device 102 sends this fourth information based on sending Radio Resource Control (RRC).

In some embodiments, when terminal 101 supports the first capability, the network device 102 may determine the fourth information.

Optionally, the network device 102 determines the fourth information by, for example, reconfiguring the fourth information for the terminal 101. Alternatively, it determines the fourth information that the terminal 101 can use from a plurality of pre-configured fourth information.

Optionally, the network device 102 can perform configuration of a time-domain parameter and/or a frequency-domain parameter of the EMW.

In some embodiments, the parameter of the EMW includes at least one of the following:
a periodicity of the EMW;
a duration of the EMW;
a time domain offset of the EMW.

Optionally, the duration of the EMW can be configured to 5ms, or other values.

Optionally, the periodicity of the EMW can be configured to at least one of the following: 40ms, 80ms, or other values besides those in the examples above.

In step S2105, the network device 102 sends fourth information to the terminal 101.

In some embodiments, when the terminal 101 supports the first capability, the network device 102 may send fourth information to the terminal 101.

In some embodiments, the terminal 101 receives the fourth information. For example, the terminal 101 that supports the first capability receives the fourth information.

In step S2106, the terminal 101 performs a measurement based on the EMW.

In some embodiments, the terminal 101 determines the parameter of the EMW based on the fourth information, that is, the terminal 101 determines the time-domain location of the EMW.

In some embodiments, the terminal 101 may perform measurement of a first measurement object (MO) based on EMW, such as receiving and measuring a reference signal corresponding to the first MO during the duration of the EMW, where the reference signal corresponding to the first MO is such as CRS.

Optionally, the first MO may correspond to an LTE neighbor cell or an LTE cell. The current serving cell of the terminal 101 can be an NR cell, meaning that the measurement can be an inter-RAT LTE measurement without a measurement gap.

Optionally, the CRS corresponding to the first MO may be sent according to a certain period, and the terminal 101 receives and measures the CRS within the EMW.

In some examples, in other measurement scenarios, the first MO may be an NR cell or a cell of another communication system.

In some embodiments, the terminal 101 performs a measurement based on the EMW and the NCSG.

Optionally, when the terminal 101 requires NCSG, the time-domain location of the EMW can be located within the ML of the NCSG. For example, the duration of at least one EMW is located within the ML. The terminal 101 receives and measures CRS within the EMW located within the ML.

Optionally, when terminal 101 requires the NCSG, if the time-domain location of a certain EMW is outside the ML of the current NCSG, terminal 101 may skip a measurement within the current NCSG location, but, during the next ML that includes an EMW, may receive and measure the CRS during the next ML that includes an EMW.

Optionally, the measurement results obtained by the terminal 101 may include at least one of the following: received signal strength indication (RSSI), reference signal received power (RSRP), or reference signal received quality (RSRQ).

In some embodiments, the terminal 101 may report the measurement results of the current measurement through a measurement report, so that network device 102 can determine the current communication status of the terminal and then perform mobility management for the terminal.

In some embodiments, the names of items such as "information", "message", "signal", "signaling", "report", "configuration", "indication", "instruction", "command", "channel", "parameter", "domain" and "field" are not limited to the specific terms used in the embodiments; these terms may be used interchangeably.

In some embodiments, the terms "obtain", "acquire", "derive", "receive", "transmit", "bidirectionally transmit", "send and/or receive" and the like may be used interchangeably. They may be interpreted as receiving from another entity, acquiring from a protocol, obtaining from a higher layer, deriving through internal processing, achieving autonomously, and other similar meanings.

In some embodiments, terms such as "send", "transmit", "report", "deliver", "transfer", "bidirectionally transfer", "send and/or receive" may be used interchangeably.

In some embodiments, the terms "radio", "wireless", "radio access network (RAN)", "access network (AN)", "RAN-based" and the like may be used interchangeably.

In some embodiments, terms such as "synchronization signal (SS)", "synchronization signal block (SSB)", "reference signal (RS)", "pilot", "pilot signal" and the like may be used interchangeably.

In some embodiments, terms such as "moment", "time point", "time" and "time location" may be used interchangeably; similarly, terms such as "duration", "time period", "time window", "window" and "time" may also be used interchangeably.

In some embodiments, terms such as "component carrier (CC)", "cell", "frequency carrier" and "carrier frequency" may be used interchangeably.

In some embodiments, terms such as "certain", "preset", "predetermined", "configured", "indicated", "a particular", "any" and "first" may be used interchangeably. Expressions like "a certain A", "a preset A", "a predetermined A", "a configured A", "an indicated A", "a particular A", "any A", or "a first A" may be interpreted as A defined in advance by protocols, or as A obtained through configuration, setting, indication, or as a specific A, a particular A, any A, a first A, and so on, but is not limited thereto.

In some embodiments, determination or judgment may be performed based on a value represented by 1 bit (0 or 1), or by a truth value (Boolean value) represented as true or false, or by comparison of numerical values (e.g., comparison with a predetermined value), but is not limited thereto.

In some embodiments, "not expecting to receive" may be interpreted as not receiving on specified time-domain and/or frequency-domain resources, or as not performing subsequent processing on the received data or the like after reception; "not expecting to send" may be interpreted as not sending, or as sending without expecting the receiver to respond to the sent content.

The methods involved in the embodiments of the present disclosure may include at least one of steps S2101 to S2106. For example, step S2103 may be implemented as an independent embodiment; steps S2101 and S2102 may be implemented as an independent embodiment; steps S2102 and S2103 may be implemented as an independent embodiment; steps S2101 to S2103 may be implemented as an independent embodiment; steps S2101 to S2104 may be implemented as an independent embodiment; steps S2101, S2103, S2104, and S2105 may be implemented as an independent embodiment, but are not limited thereto.

In some embodiments, step S2101 and step S2102 may be performed simultaneously, steps S2101 to S2103 may be performed simultaneously, and step S2104 and step S2105 may be performed simultaneously. For example, the terminal 101 may use the same capability information to simultaneously send part or all of the first information, the second information, and the third information. For example, the terminal 101 may use the same capability information to simultaneously send the first information and the third information, and then send the second information based on another capability information; or, it may use the same capability information to simultaneously send the second information and the third information, and then send the first information based on another capability information; or, it may use the same capability information to simultaneously send the first information, the second information, and the third information; or, it may respectively send the first information, the second information, and the third information based on three different capability information.

In some embodiments, steps S2101, S2102, S2104, S2105, and S2106 are optional. In different embodiments, one or more of these steps may be omitted or substituted.

In some embodiments, steps S2104, S2105, and S2106 are optional. In different embodiments, one or more of these steps may be omitted or substituted.

In some embodiments, steps S2101 to S2102 are optional. In different embodiments, one or more of these steps may be omitted or substituted.

In some embodiments, reference may be made to other optional implementation manners described before or after the specification corresponding to FIG. 2a.

FIG. 2b is an interactive schematic diagram of a communication method according to an embodiment of the present disclosure. As shown in FIG. 2b, embodiments of the present disclosure relate to a communication method, the method including the following step(s).

In step S2201, the terminal 101 sends the second information to the network device 102.

In some embodiments, for optional implementations of step S2201, reference may be made to the optional implementations of step S2101 in FIG. 2a, which are not repeated here.

In step S2202, the terminal 101 sends the third information to the network device 102.

In some embodiments, for optional implementations of step S2202, reference may be made to the optional implementations of step S2102 in FIG. 2a, which are not repeated here.

In step S2203, the terminal 101 sends the first information to the network device 102.

In some embodiments, for optional implementations of step S2203, reference may be made to the optional implementations of step S2103 in FIG. 2a, which are not repeated here.

In step S2204, the network device 102 does not configure or send the fourth information.

In some embodiments, when the terminal 101 does not support the first capability, network device 102 does not configure or send fourth information.

In some embodiments, for optional implementations of the fourth information, reference may be made to the optional implementations of step S2104 in FIG. 2a, which are not repeated here.

In some embodiments, the network device 102 does not configure the fourth information, that is, the network device 102 is not to send the fourth information to the terminal 101.

In step S2205, the terminal 101 performs a measurement based on a specific reference signal.

In some embodiments, the specific reference signal may be, for example, a CRS, but is not limited thereto. It may also be a primary synchronization signal (PSS), a secondary synchronization signal (SSS), or the like.

Optionally, for a newly identified cell, the terminal 101 may use the SSS or the PSS for measurement; for an already identified cell, the terminal 101 may use the CRS for measurement.

In some embodiments, the network device 102 sends the CRS according to a certain period.

Optionally, the period of the CRS may be configured by the network device 102 or defined by a protocol.

In some embodiments, the terminal 101 may measure the first MO based on the CRS. For optional implementations of the first MO, reference may be made to the optional implementations of step S2106 in FIG. 2a, which are not repeated here.

In some embodiments, when the terminal 101 does not support the first capability, the terminal 101 may receive and measure the first MO at an appropriate time-domain location based on the period of the CRS. For example, the terminal 101 may, according to the CRS period, receive and measure the CRS corresponding to the first MO at any CRS transmission occasion to obtain a measurement result. For optional implementations related to the measurement, reference may also be made to the optional implementations of step S2106 in FIG. 2a, which are not repeated here.

In some examples, in other measurement scenarios, the first MO may be an NR cell or a cell of another communication system. When the first MO is an NR cell, the terminal 101 may also perform a measurement based on the timing of the synchronization signal/physical broadcast channel block measurement timing configuration (SMTC).

The methods involved in the embodiments of the present disclosure may include at least one of steps S2201 to S2205. For example, step S2203 may be implemented as an independent embodiment; steps S2201 and S2202 may be implemented as an independent embodiment; steps S2202 and S2203 may be implemented as an independent embodiment; steps S2201 to S2203 may be implemented as an independent embodiment; steps S2201 to S2204 may be implemented as an independent embodiment; steps S2201, S2202, S2203, and S2205 may be implemented as an independent embodiment, but are not limited thereto.

In some embodiments, steps S2201 and S2202 may be performed simultaneously, steps S2201 to S2203 may be performed simultaneously, and steps S2204 and S2205 may be performed in a different order or performed concurrently.

In some embodiments, steps S2201, S2204, and S2205 are optional. In different embodiments, one or more of these steps may be omitted or substituted.

In some embodiments, steps S2204 and S2205 are optional. In different embodiments, one or more of these steps may be omitted or substituted.

In some embodiments, steps S2201 through S2202 are optional. In different embodiments, one or more of these steps may be omitted or substituted.

In some embodiments, reference may be made to other optional implementation manners described before or after the specification corresponding to FIG. 2b.

FIG. 3a is a schematic flowchart illustrating a communication method according to an embodiment of the present disclosure. As shown in FIG. 3a, embodiments of the present disclosure relate to a communication method performed by the terminal 101, the method including the following step(s).

In step S3101, the second information is sent.

Optionally, for optional implementations of step S3101, reference may be made to the optional implementations of step S2101 in FIG. 2a, step S2201 in FIG. 2b, and other related parts in the embodiments associated with FIG. 2a and FIG. 2b, which are not repeated here.

In some embodiments, the terminal 101 sends the second information to the network device 102, but is not limited thereto, and may also send the second information to other entities.

In some embodiments, step S3101 is omitted, and the function or capability indicated by the second information is set as the default or predefined.

In some embodiments, the network device 102 receives the second information, thereby determining the capability indicated by the second information.

In step S3102, the third information is sent.

Optionally, for optional implementations of step S3102, reference may be made to the optional implementations of step S2102 in FIG. 2a, step S2202 in FIG. 2b, and other related parts in the embodiments associated with FIG. 2a and FIG. 2b, which are not repeated here.

In some embodiments, the terminal 101 sends the third information to the network device 102, but is not limited thereto, and may also send the third information to other entities.

In some embodiments, the third information indicates whether the terminal 101 requires NCSG.

Optionally, the network device 102 receives the third information.

In step S3103, the first information is sent.

Optionally, for optional implementations of step S3103, reference may be made to the optional implementations of step S2103 in FIG. 2a, step S2203 in FIG. 2b, and other related parts in the embodiments associated with FIG. 2a and FIG. 2b, which are not repeated here.

In some embodiments, the terminal 101 sends the first information to the network device 102, but is not limited thereto, and may also send first information to other entities.

Optionally, the network device 102 receives the first information.

In some embodiments, the first information is used by the network device 102 to perform appropriate configuration. For optional implementations thereof, reference may be made to the optional implementations of step S2103 in FIG. 2a, step S2203 in FIG. 2b, and other related parts in the embodiments associated with FIG. 2a and FIG. 2b, which are not repeated here.

In step S3104, the fourth information is obtained.

Optionally, for optional implementations of step S3104, reference may be made to the optional implementations of step S2104 to step S2105 in FIG. 2a and other related parts in the embodiments associated with FIG. 2a, which are not repeated here.

In some embodiments, the terminal 101 receives the fourth information sent by the network device 102, but is not limited thereto, and may also receive the first information sent by other entities.

In some embodiments, the terminal 101 obtains the fourth information as defined by the protocol.

In some embodiments, the terminal 101 obtains the fourth information from an upper layer(s).

In some embodiments, the terminal 101 obtains the fourth information through processing.

In some embodiments, step S3104 is omitted, and the terminal 101 autonomously implements the function indicated by the fourth information, or the aforementioned function is set as the default or predefined.

In some embodiments, the network device 102 determines the fourth information based on the first information and sends the fourth information to the terminal 101.

In step S3105, a measurement is performed based on the EMW or the specific reference signal.

Optionally, for optional implementations of step S3105, reference may be made to the optional implementations of step S2106 in FIG. 2a, step S2205 in FIG. 2b, and other related parts in the embodiments associated with FIG. 2a and FIG. 2b, which are not repeated here.

The methods involved in the embodiments of the present disclosure may include at least one of step S3101 to step S3105. For example, step S3103 may be implemented as an independent embodiment; steps S3101 and S3102 may be implemented as an independent embodiment; step S3102 and step S3103 may be implemented as an independent embodiment; steps S3101 through S3103 may be implemented as an independent embodiment; step S3101 to step S3104 may be implemented as an independent embodiment; however, the disclosure is not limited thereto.

In some embodiments, step S3101 and step S3102 can be performed simultaneously, and step S3101 to step S3103 can be performed simultaneously.

In some embodiments, step S3101, step S3102, step S3104 and step S3105 are optional. In different embodiments, one or more of these steps may be omitted or substituted.

In some embodiments, step S3104 and step S3105 are optional. In different embodiments, one or more of these steps may be omitted or substituted.

In some embodiments, step S3104 is optional. In different embodiments, one or more of these steps may be omitted or substituted.

FIG. 3b is a schematic flowchart illustrating a communication method according to an embodiment of the present disclosure. As shown in FIG. 3b, embodiments of the present disclosure relate to a communication method performed by the terminal 101, the method including the following step(s).

In step S3201, the second information is sent.

Optionally, for optional implementations of step S3201, reference may be made to the optional implementations of step S2101 in FIG. 2a, step S2201 in FIG. 2b, and other related parts in the embodiments associated with FIG. 2a and FIG. 2b, which are not repeated here.

In step S3202, the third information is sent.

Optionally, for optional implementations of step S3202, reference may be made to the optional implementations of step S2102 in FIG. 2a, step S2202 in FIG. 2b, and other related parts in the embodiments associated with FIG. 2a and FIG. 2b, which are not repeated here.

In step S3203, the first information is sent.

Optionally, for optional implementations of step S3203, reference may be made to the optional implementations of step S2103 in FIG. 2a, step S2203 in FIG. 2b, and other related parts in the embodiments associated with FIG. 2a and FIG. 2b, which are not repeated here.

The methods involved in the embodiments of the present disclosure may include at least one of step S3201 to step S3203. For example, step S3203 may be implemented as an independent embodiment; step S3201 and step S3202 may be implemented as an independent embodiment; step S3202 and step S3203 may be implemented as an independent embodiment; step S3201 to step S3203 may be implemented as an independent embodiment; however, the disclosure is not limited thereto.

In some embodiments, step S3201 and step S3202 may be performed simultaneously, and step S3201 to step S3203 may be performed simultaneously.

In some embodiments, step S3201 and step S3202 are optional.

In the embodiments of the present disclosure, step S3203 may be combined with step S3104 in FIG. 3a or with step S3105 in FIG. 3a.

FIG. 3c is a schematic flowchart illustrating a communication method according to an embodiment of the present disclosure. As shown in FIG. 3c, embodiments of the present disclosure relate to a communication method performed by the terminal 101, the method including the following step(s).

In step S3301, the first information is sent.

Optionally, for optional implementations of step S3301, reference may be made to the optional implementations of step S2103 in FIG. 2a, step S2203 in FIG. 2b, and other related parts in the embodiments associated with FIG. 2a and FIG. 2b, which are not repeated here.

In step S3302, the fourth information is obtained.

Optionally, for optional implementations of step S3302, reference may be made to the optional implementations of step S2104 to step S2105 in FIG. 2a and other related parts in the embodiments associated with FIG. 2a, which are not repeated here.

In step S3303, a measurement is performed based on the EMW or the specific reference signal.

Optionally, for optional implementations of step S3303, reference may be made to the optional implementations of step S2106 in FIG. 2a, step S2205 in FIG. 2b, and other related parts in the embodiments associated with FIG. 2a and FIG. 2b, which are not repeated here.

The methods involved in the embodiments of the present disclosure may include at least one of step S3301 to step S3303. For example, step S3301 may be implemented as an independent embodiment; step S3301 and step S3302 may be implemented as an independent embodiment; step S3301 to step S3303 may be implemented as an independent embodiment; however, the disclosure is not limited thereto.

In some embodiments, step S3302 and step S3303 are optional.

In the embodiments of the present disclosure, step S3301 may be combined with step S3101 in FIG. 3a or with step S3102 in FIG. 3a.

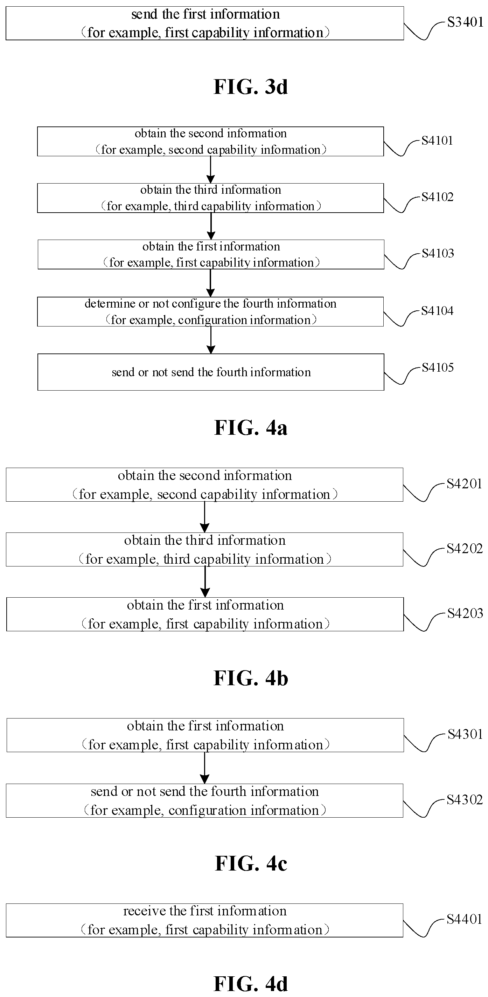

FIG. 3d is a schematic flowchart illustrating a communication method according to an embodiment of the present disclosure. As shown in FIG. 3d, embodiments of the present disclosure relate to a communication method performed by the terminal 101, the method including the following step(s).

In step S3401, the first information is sent.

Optionally, for optional implementations of step S3401, reference may be made to the optional implementations of step S2101 to step S2103 in FIG. 2a, step S2201 to step S2203 in FIG. 2b, and other related parts in the embodiments associated with FIG. 2a and FIG.2b, which are not repeated here.

In some embodiments, the terminal 101 may send the first information after sending the second information and the third information, thereby indicating whether the first capability is supported.

In some embodiments, the terminal 101 simultaneously sends, based on the same capability information, part or all of the first information, the second information, and the third information. For example, the terminal 101 may simultaneously send, based on the same capability information, the first information and the third information, and then send the second information based on another capability information; or, the terminal 101 may simultaneously send, based on the same capability information, the second information and the third information, and then send the first information based on another capability information; or, the terminal 101 may simultaneously send, based on the same capability information, the first information, the second information, and the third information; or, the terminal 101 may respectively send, based on three different capability information, the first information, the second information, and the third information.

Optionally, the second information indicates that the terminal supports the NCSG capability.

Optionally, the third information indicates that the terminal supports a measurement capability requiring neither a measurement gap nor NCSG, or supports a measurement capability requiring NCSG.

In some embodiments, when terminal 101 supports the first capability, the terminal can receive fourth information sent by the network device 102, thereby obtaining at least one of the following parameters: the periodicity, the duration, and the time domain offset of the EMW.

In some embodiments, when the terminal 101 supports the first capability, the terminal 101 may perform a measurement based on the EMW indicated by the fourth information. For related optional implementations, reference may be made to the optional implementations of step S2105 to step S2106 in FIG. 2a and other related parts in the embodiments associated with FIG. 2a, which are not be repeated here.

In some embodiments, when the terminal 101 does not support the first capability, it may perform a measurement based on the CRS sending period configured by network device 102. For related optional implementations, reference may be made to the optional implementations of step S2204 to step S2205 in FIG. 2b and other relevant parts in the embodiments associated with FIG. 2b, which are not repeated here.

In the embodiments of the present disclosure, step S3401 may be combined with step S3101 in FIG. 3a, step S3401 may be combined with step S3102 in FIG. 3a, step S3401 may be combined with step S3104 in FIG. 3a, and step S3401 may be combined with step S3105 in FIG. 3a.

FIG. 4a is a schematic flowchart illustrating a communication method according to an embodiment of the present disclosure. As shown in FIG. 4a, embodiments of the present disclosure relate to a communication method performed by the network device 102, the method including the following step(s).

In step S4101, the second information is obtained.

Optionally, for optional implementations of step S4101, reference may be made to the optional implementations of step S2101 in FIG. 2a, step S2201 in FIG. 2b, and other related parts in the embodiments associated with FIG. 2a and FIG. 2b, which are not repeated here.

In some embodiments, the network device 102 may receive the second information from the terminal 101, but is not limited thereto, and may also receive the second information from other entities.

In some embodiments, step S4101 is omitted, and the function or capability indicated by the second information is set as the default or predefined.

In step S4102, the third information is obtained.

Optionally, for optional implementations of step S4102, reference may be made to the optional implementations of step S2102 in FIG. 2a, step S2202 in FIG. 2b, and other related parts in the embodiments associated with FIG. 2a and FIG. 2b, which are not repeated here.

In some embodiments, the network device 102 may receive the third information from the terminal 101, but is not limited thereto, and may also receive the third information from other entities.

In some embodiments, step S4102 is omitted, and the function or capability indicated by the third information is set as the default or predefined.

In step S4103, the first information is obtained.

Optionally, for optional implementations of step S4103, reference may be made to the optional implementations of step S2103 in FIG. 2a, step S2203 in FIG. 2b, and other related parts in the embodiments associated with FIG. 2a and FIG. 2b, which are not repeated here.

In some embodiments, the network device 102 may receive the first information from the terminal 101, but is not limited thereto, and may also receive the first information from other entities.

In step S4104, the fourth information is determined or the fourth information is not configured.

Optionally, for optional implementations of step S4104, reference may be made to the optional implementations of step S2104 in FIG. 2a, step S2204 in FIG. 2b, and other related parts in the embodiments associated with FIG. 2a and FIG. 2b, which are not repeated here.

In step S4105, the fourth information is sent or not sent.

Optionally, for optional implementations of step S4105, reference may be made to the optional implementations of step S2105 in FIG. 2a, step S2204 in FIG. 2b, and other related parts in the embodiments associated with FIG. 2a and FIG. 2b, which are not repeated here.

The methods involved in the embodiments of the present disclosure may include at least one of step S4101 to step S4105. For example, step S4103 may be implemented as an independent embodiment; step S4101 and step S4102 may be implemented as an independent embodiment; step S4102 and step S4103 may be implemented as an independent embodiment; step S4101 to step S4103 may be implemented as an independent embodiment; step S4101 to step S4103 and step S4105 may be implemented as an independent embodiment; however, the disclosure is not limited thereto.

In some embodiments, step S4101 and step S4102 may be performed simultaneously, and step S4101 to step S4103 may be performed simultaneously.

In some embodiments, step S4101, step S4102, step S4104, and step S4105 are optional. In different embodiments, one or more of these steps may be omitted or substituted.

In some embodiments, step S4104 and step S4105 are optional. In different embodiments, one or more of these steps may be omitted or substituted.

In some embodiments, step S4104 is optional. In different embodiments, one or more of these steps may be omitted or substituted.

FIG. 4b is a schematic flowchart illustrating a communication method according to an embodiment of the present disclosure. As shown in FIG. 4b, embodiments of the present disclosure relate to a communication method performed by the network device 102, the method including the following step(s).

In step S4201, the second information is obtained.

Optionally, for optional implementations of step S4201, reference may be made to the optional implementations of step S2101 in FIG. 2a, step S2201 in FIG. 2b, and other related parts in the embodiments associated with FIG. 2a and FIG. 2b, which are not repeated here.

In step S4202, the third information is obtained.

Optionally, for optional implementations of step S4202, reference may be made to the optional implementations of step S2102 in FIG. 2a, step S2202 in FIG. 2b, and other related parts in the embodiments associated with FIG. 2a and FIG. 2b, which are not repeated here.

In step S4203, the first information is obtained.

Optionally, for optional implementations of step S4203, reference may be made to the optional implementations of step S2103 in FIG. 2a, step S2203 in FIG. 2b, and other related parts in the embodiments associated with FIG. 2a and FIG. 2b, which are not repeated here.

The methods involved in the embodiments of the present disclosure may include at least one of steps S4201 to S4203. For example, step S4203 may be implemented as an independent embodiment; step S4201 and step S4202 may be implemented as an independent embodiment; step S4202 and step S4203 may be implemented as an independent embodiment; step S4201 to step S4203 may be implemented as an independent embodiment; however, the disclosure is not limited thereto.

In some embodiments, step S4201 and step S4202 may be performed simultaneously, and step S4201 to step S4203 may be performed simultaneously.

In some embodiments, step S4201 and step S4202 are optional.

In the embodiments of the present disclosure, step S4203 may be combined with step S4104 in FIG. 4a or with step S4105 in FIG. 4a.

FIG. 4c is a schematic flowchart illustrating a communication method according to an embodiment of the present disclosure. As shown in FIG. 4c, embodiments of the present disclosure relate to a communication method performed by the network device 102, the method including the following step(s).

In step S4301, the first information is obtained.

Optionally, for optional implementations of step S4301, reference may be made to the optional implementations of step S2103 in FIG. 2a, step S2203 in FIG. 2b, and other related parts in the embodiments associated with FIG. 2a and FIG. 2b, which are not repeated here.

In step S4302, the fourth information is sent or not sent.

Optionally, for optional implementations of step S4302, reference may be made to the optional implementations of step S2104 to step S2105 in FIG. 2a, step S2204 in FIG. 2b, and other related parts in the embodiments associated with FIG. 2a, which are not repeated here.

The methods involved in the embodiments of the present disclosure may include at least one of step S4301 to step S4302.

In some embodiments, step S4302 is optional.

In the embodiments of the present disclosure, step S4301 may be combined with step S4101 in FIG. 4a or with step S4102 in FIG. 4a.

FIG. 4d is a schematic flowchart illustrating a communication method according to an embodiment of the present disclosure. As shown in FIG. 4d, embodiments of the present disclosure relate to a communication method performed by the network device 102, the method including the following step(s).

In step S4401, the first information is received.

Optionally, for optional implementations of step S4401, reference may be made to the optional implementations of step S2101 to step S2103 in FIG. 2a, step S2201 to step S2203 in FIG. 2b, and other related parts in the embodiments associated with FIG. 2a and FIG. 2b, which are not repeated here.

In some embodiments, the network device 102 may receive the first information after receiving the second information and the third information, thereby determining whether the terminal supports the first capability.

In some embodiments, the network device 102 receives the same capability information and obtains the first information, second information, and third information therefrom.

Optionally, the second information indicates that the terminal supports an NCSG capability.

Optionally, the third information indicates that the terminal supports a measurement capability requiring neither a measurement gap nor NCSG, or supports a measurement capability requiring NCSG.

In some embodiments, when terminal 101 supports the first capability, the network device 102 may configure the fourth information, thereby indicating at least one of the following parameters: the periodicity, duration, and time domain offset of the EMW. The network device 102 may then send the fourth information to the terminal 101. For related optional implementations, reference may be made to the optional implementations of step S2104 to step S2105 in FIG. 2a and other related parts in the embodiments associated with FIG. 2a, which are not repeated here.

In some embodiments, when terminal 101 does not support the first capability, network device 102 may not configure the fourth information or may not send the fourth information. For related optional implementations, reference may be made to the optional implementations of step S2204 in FIG. 2b and other related parts in the embodiments associated with FIG. 2b, which are not repeated here.

In the embodiments of the present disclosure, step S4401 may be combined with step S4101 in FIG. 4a, step S4401 may be combined with step S4102 in FIG. 4a, step S4401 may be combined with step S4104 in FIG. 4a, and step S4401 may be combined with step S4105 in FIG. 4a.

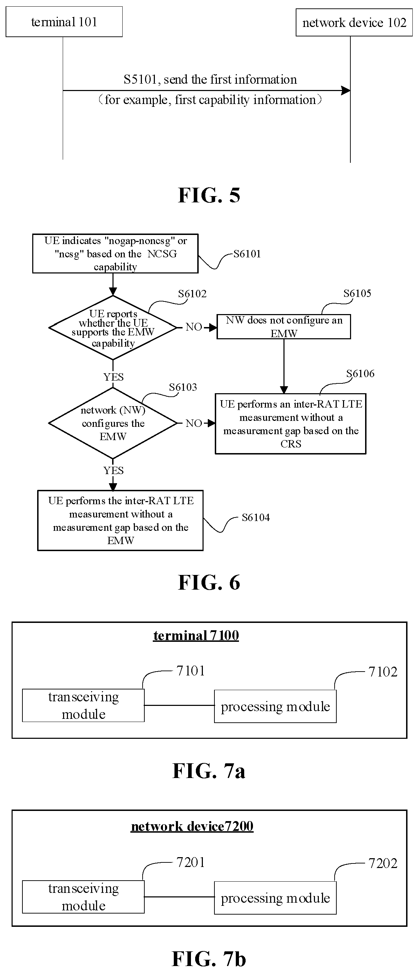

FIG. 5 is an interactive schematic diagram of a communication method according to an embodiment of the present disclosure. As shown in FIG. 5, the embodiments of the present disclosure relate to a communication method, the method including the following step(s).

In step S5101, the terminal 101 sends the first information to the network device 102.

Optionally, for the optional implementation of step 5101, reference may be made to the optional implementations of step S2103 in FIG. 2a, step S3103 in FIG. 3a, and step S4103 in FIG. 4a, and other related parts in the embodiments associated with FIG. 2a, FIG. 3a, and FIG. 4a, which are not repeated here.

In some embodiments, the method described above may include the methods described in the embodiments related to the communication system side, terminal side, network device side, etc, which are not repeated here.

FIG. 6 is a schematic flowchart illustrating a communication method according to an embodiment of the present disclosure. As shown in FIG. 6, embodiments of the present disclosure relate to a communication method, the method including the following step(s).

In step S6101, the UE indicates "nogap-noncsg" or "ncsg" based on the R17 NCSG capability.

In some embodiments, this NCSG capability may correspond to the second information or the second capability information in the aforementioned embodiments.

Optionally, the NCSG capability may be the NeedForGapNCSG-InfoEUTRA-r17.

Optionally, terminal 101 can perform the inter-RAT LTE measurement without a measurement gap based on the NCSG capability.

In some embodiments, for the optional implementation of step S6101, reference may be made to the optional implementations of step S2101 to step S2102 in FIG. 2a and step S2201 to step S2202 in FIG. 2b.

In step S6102, the UE reports whether the UE supports the R18 EMW capability.

In some embodiments, the UE corresponds to the terminal 101 in the aforementioned embodiments.

In some embodiments, the EMW capability may correspond to the first capability in the aforementioned embodiments.

Optionally, the UE may report whether the UE supports the EMW capability based on the first information in the aforementioned embodiments.

In some embodiments, for the optional implementation of step S6102, reference may be made to the optional implementations of step S2103 in FIG. 2a and step S2203 in FIG. 2b.

Optionally, if the UE supports the EMW capability, the method may proceed to perform step S6103 to step S6104 after step S6102.

Optionally, if the UE does not support the EMW capability, the method may proceed to perform step S6105 to step S6106 after step S6102.

In step S6103, the network (NW) configures the EMW.

In some embodiments, the NW corresponds to the network device 102 in the aforementioned embodiments.

In some embodiments, the NW may configure the parameter of the EMW based on the fourth information from the aforementioned embodiments.

In some embodiments, for the optional implementation of step S6103, reference may be made to the optional implementations of step S2104 in FIG. 2a and step S2204 in FIG. 2b.

In some embodiments, the NW may configure an EMW for the UE when the UE supports the EMW capability, and may not configure an EMW when the UE does not support the EMW capability.

Optionally, if the NW configures an EMW, the method proceeds to step S6104 after step S6103.

Optionally, if the NW does not configure an EMW, the method proceeds to step S6106 after step S6103.

In step S6104, the UE performs the inter-RAT LTE measurement without a measurement gap based on the EMW.

In some embodiments, the inter-RAT LTE corresponds to the first MO in the aforementioned embodiments, or the MO to be measured for the inter-RAT LTE includes the first MO.

In some embodiments, for the optional implementation of step S6104, reference may be made to the optional implementation of step S2106 in FIG. 2a.

In step S6105, the NW does not configure the EMW.

In some embodiments, for the implementation of step S6105, reference may be made to the optional implementation of step S2204 in FIG. 2b.

In step S6106, the UE performs an inter-RAT LTE measurement without a measurement gap based on the CRS.

In some embodiments, the inter-RAT LTE corresponds to the first MO in the aforementioned embodiments, or the MO to be measured for the inter-RAT LTE includes the first MO.

In some embodiments, the CRS or the measurement performed by the terminal 101 based on the CRS may also refer to the relevant requirements of R17.

In some embodiments, for the implementation of step S6106, reference may be made to the optional implementation of step S2205 in FIG. 2b.

The methods involved in the embodiments of the present disclosure may include at least one of step S6101 to step S6106. For example, step S6101 may be implemented as an independent embodiment, step S6102 may be implemented as an independent embodiment, step S6101 to step S6104 may be implemented as an independent embodiment, step S6101, step S6102, step S6105, and step S6106 may be implemented as an independent embodiment, but are not limited thereto.

In some embodiments, steps S6101 and S6102 may be performed simultaneously.

In some embodiments, step S6101, step S6103, step S6104, step S6105, and step S6106 are optional, and one or more of these steps may be omitted or substituted in different embodiments.

In some embodiments, steps S6103, S6104, S6105, and S6106 are optional, and one or more of these steps may be omitted or substituted in different embodiments.

In some embodiments, step S6103, step S6105, and step S6106 are optional, and one or more of these steps may be omitted or substituted in different embodiments.

In the embodiments of the present disclosure, part or all of the steps and their optional implementations may be arbitrarily combined with part or all of the steps in other embodiments, and may also be arbitrarily combined with the optional implementations of other embodiments.

In the embodiments of the present disclosure, the UE reports its capability on the EMW, thereby facilitating configuration by the NW.

The embodiments of the present disclosure also propose an apparatus for implementing any of the aforementioned methods. For example, an apparatus is provided, which includes units or modules configured to implement the steps performed by the terminal in any of the aforementioned methods. As another example, yet another apparatus is proposed, which includes units or modules configured to implement the steps performed by a network device (e.g., an access network device, a core network function node, a core network device, etc.) in any of the aforementioned methods.

It should be understood that the division of units or modules in the above apparatus is merely a division of logical functions. In practical implementation, they may be fully or partially integrated into a single physical entity or physically separated. Additionally, the units or modules in the apparatus may be implemented in the form of software invoked by a processor. For example, the apparatus includes a processor connected to a memory, where the memory stores instructions. The processor invokes the instructions stored in the memory to implement any of the above methods or to realize the functions of the units or modules in the apparatus. The processor may be a general-purpose processor, such as a Central Processing Unit (CPU) or a microprocessor, and the memory may be internal or external to the apparatus. Alternatively, the units or modules in the apparatus may be implemented in the form of hardware circuits. The functions of some or all units or modules may be realized through the design of hardware circuits, which can be understood as one or more processors. For example, in one implementation, the hardware circuit is an application-specific integrated circuit (ASIC). Based on designing the logical relationships among the circuit components, the functions of some or all units or modules described above can be achieved. In another implementation, the hardware circuit may be realized through a programmable logic device (PLD). Taking a Field Programmable Gate Array (FPGA) as an example, it may include a large number of logic gate circuits. The connectivity between the logic gate circuits is configured via configuration files, thereby realizing the functions of some or all units or modules described above. All units or modules in the apparatus may be fully implemented in the form of software invoked by a processor, fully implemented in the form of hardware circuits, or partially implemented in the form of software invoked by a processor with the remaining parts implemented in the form of hardware circuits.

In the embodiments of the present disclosure, a processor refers to a circuit capable of signal processing. In one implementation, the processor may be a circuit capable of reading and executing instructions, such as a Central Processing Unit (CPU), a microprocessor, a Graphics Processing Unit (GPU) (which may be understood as a microprocessor), or a Digital Signal Processor (DSP). In another implementation, the processor may realize specific functions through the logical relationships of hardware circuits. The logical relationships of these hardware circuits may be fixed or reconfigurable. For instance, the processor may be a hardware circuit implemented as an Application-Specific Integrated Circuit (ASIC) or a Programmable Logic Device (PLD), such as an FPGA. In reconfigurable hardware circuits, the process of the processor loading configuration files to configure the hardware circuits can be understood as the processor loading instructions to realize the functions of some or all of the units or modules described above. Additionally, hardware circuits designed for artificial intelligence may also be included, which can be understood as ASICs, such as Neural Network Processing Units (NPUs), Tensor Processing Units (TPUs), or Deep Learning Processing Units (DPUs).

FIG. 7a is a schematic structural diagram of a terminal according to an embodiment of the present disclosure. As shown in FIG. 7a, the terminal 7100 may include at least one of: a transceiving module 7101, a processing module 7102, etc. In some embodiments, the transceiving module 7101 is configured to send first information, where the first information indicates whether a terminal supports a first capability, and the first capability is a capability of performing a measurement based on an Effective Measurement Window (EMW). Optionally, the transceiving module 7101 is configured to perform at least one of communication steps (e.g., steps S2101, S2102, S2103, but not limited thereto) such as sending and/or receiving performed by the terminal 101 in any of the above methods, which are not repeated here. Optionally, the processing module is configured to perform at least one of other steps (e.g., steps S2106, S2205, but not limited thereto) performed by the terminal 101 in any of the above methods, which are not repeated here.

FIG. 7b is a schematic structural diagram of a network device according to an embodiment of the present disclosure. As shown in FIG. 7b, the network device 7200 may include at least one of: a transceiving module 7201, a processing module 7202, etc. In some embodiments, the transceiving module 7201 is configured to receive first information, where the first information indicates whether a terminal supports a first capability, and the first capability is a capability of performing a measurement based on an Effective Measurement Window (EMW). Optionally, the transceiving module 7201 is configured to perform at least one of communication steps (e.g., step S2105, but not limited thereto) such as sending and/or receiving performed by the network device 102 in any of the above methods, which are not repeated here. Optionally, the processing module is configured to perform at least one of other steps (e.g., steps S2104, S2204, but not limited thereto) performed by the network device 102 in any of the above methods, which are not repeated here.

In some embodiments, the transceiving module may include a sending module and/or a receiving module, which may be separate or integrated. Optionally, the transceiving module may be interchanged with a transceiver.

In some embodiments, the processing module may be a single module or may include multiple sub-modules. Optionally, the multiple sub-modules respectively perform all or part of the steps required to be performed by the processing module. Optionally, the processing module may be interchanged with a processor.

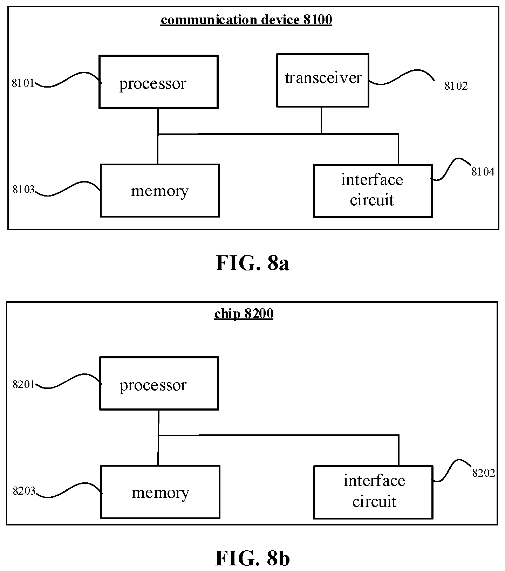

FIG. 8a is a schematic structural diagram of a communication device 8100 according to an embodiment of the present disclosure. The communication device 8100 may be a network device (e.g., an access network device, a core network device, etc.), a terminal (e.g., a user equipment, etc.), a chip, chip system, or processor that supports a network device in implementing any of the above methods, or a chip, chip system, or processor that supports a terminal in implementing any of the above methods. The communication device 8100 may be used to implement the methods described in the above method embodiments. For details, refer to the descriptions in the above method embodiments.

As shown in FIG. 8a, the communication device 8100 includes one or more processors 8101. The processor(s) 8101 may be general-purpose processors or special-purpose processors, such as baseband processors or central processing units. A baseband processor may be used to process communication protocols and communication data, and a central processing unit may be used to control a communication apparatus (e.g., a base station, baseband chip, terminal device, terminal device chip, DU, CU, etc.), perform programs, and process program data. Optionally, the communication device 8100 is configured to perform any of the above methods. Optionally, the one or more processors 8101 are configured to invoke instructions to cause the communication device 8100 to perform any of the above methods.

In some embodiments, the communication device 8100 further includes one or more transceivers 8102. When the communication device 8100 includes one or more transceivers 8102, the transceiver(s) 8102 perform at least one of communication steps (e.g., step S2105, but not limited thereto) such as sending and/or receiving in the above methods, and the processor(s) 8101 perform at least one of other steps (e.g., steps S2104, S2204, but not limited thereto). In some embodiments, the transceiver may include a receiver and/or a transmitter, which may be separate or integrated. Optionally, terms such as transceiver, transceiver unit, transceiver circuit, interface circuit, and interface may be used interchangeably; terms such as transmitter, sending unit, sending circuit may be used interchangeably; and terms such as receiver, receiving unit, receiver circuit and reception circuit may be used interchangeably.

In some embodiments, the communication device 8100 further includes one or more memories 8103 for storing data. Optionally, all or part of the memory 8103 may also be located outside the communication device 8100. In optional embodiments, the communication device 8100 may include one or more interface circuits 8104. Optionally, the interface circuit 8104 is connected to the memory 8103 and may be configured to receive data from the memory 8103 or other devices or to send data to the memory 8103 or other devices. For example, the interface circuit 8104 may read data stored in the memory 8103 and send the data to the processor 8101.

The communication device 8100 described in the above embodiments may be a network device or a terminal, but the scope of the communication device 8100 described in the present disclosure is not limited thereto. The structure of the communication device may not be limited by FIG. 8a. The communication device may be an independent device or part of a larger device. For example, the communication device may be: 1) an independent integrated circuit (IC), or chip, or chip system, or subsystem; (2) a set of one or more ICs, optionally, the set of ICs may also include storage components for storing data and programs; (3) an ASIC, such as a modem; (4) a module embeddable in other devices; (5) a receiver, terminal device, smart terminal device, cellular phone, wireless device, handset, mobile unit, vehicle-mounted device, network device, cloud device, artificial intelligence device; (6) others, and the like.

FIG. 8b is a schematic structural diagram of a chip 8200 according to an embodiment of the present disclosure. For the case where the communication device 8100 may be a chip or chip system, refer to the schematic structural diagram of the chip 8200 shown in FIG. 8b, but it is not limited thereto.

The chip 8200 includes one or more processors 8201. The chip 8200 is configured to perform any of the above methods.

In some embodiments, the chip 8200 further includes one or more interface circuits 8202. Optionally, terms such as interface circuit, interface, and transceiver pin may be used interchangeably. In some embodiments, the chip 8200 further includes one or more memories 8203 for storing data. Optionally, all or part of the memory 8203 may be located outside the chip 8200. Optionally, the interface circuit 8202 is connected to the memory 8203 and may be configured to receive data from the memory 8203 or other devices or to send data to the memory 8203 or other devices. For example, the interface circuit 8202 may read data stored in the memory 8203 and send the data to the processor 8201.

In some embodiments, the interface circuit 8202 performs at least one of communication steps (e.g., steps S2101, S2102, S2103, but not limited thereto) such as sending and/or receiving in the above methods. The interface circuit 8202 performing communication steps such as sending and/or receiving in the above methods refers to, for example, the interface circuit 8202 performing data interaction among the processor 8201, the chip 8200, the memory 8203, or transceiver components. In some embodiments, the processor 8201 performs at least one of other steps (e.g., steps S2104, S2106, but not limited thereto).

The modules and/or devices described in the embodiments of virtual devices, physical devices, chips, etc., may be combined or separated arbitrarily as appropriate. Optionally, part or all of the steps may also be performed collaboratively by multiple modules and/or devices, which is not limited herein.

The present disclosure also proposes a storage medium on which instructions are stored. When the instructions run on the communication device 8100, they cause the communication device 8100 to perform any of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a transitory storage medium.

The present disclosure also proposes a program product which, when executed by the communication device 8100, causes the communication device 8100 to execute any of the above methods. Optionally, the program product is a computer program product.

The present disclosure also proposes a computer program which, when run on a computer, causes the computer to execute any of the above methods.

### Industrial Applicability

**In** the above embodiments, the terminal may send the first information to the network device to report whether the terminal supports the capability of performing a measurement based on an EMW, thereby enabling the network device to obtain the capability of the terminal and making reasonable resource allocation based on the capability of the terminal.

## Claims

1. A communication method, comprising:
sending first information, wherein the first information indicates whether a terminal supports a first capability, and the first capability is a capability of performing a measurement based on an Effective Measurement Window (EMW).

2. The method according to claim 1, further comprising:
sending second information, wherein the second information indicates that the terminal supports a Network Controlled Small Gap (NCSG) capability.

3. The method according to claim 1 or 2, further comprising:
sending third information, wherein the third information indicates that the terminal supports one of the following:
a measurement capability requiring neither a measurement gap nor NCSG; or
a measurement capability requiring NCSG.

4. The method according to any one of claims 1 to 3, further comprising:
receiving fourth information, wherein the terminal supports the first capability, and the fourth information indicates a parameter of the EMW configured by a network device.

5. The method according to claim 4, wherein the parameter of the EMW comprises at least one of the following:
a periodicity of the EMW;
a duration of the EMW;
a time domain offset of the EMW.

6. The method according to any one of claims 1 to 5, further comprising:
performing the measurement based on the EMW, wherein the terminal supports the first capability.

7. The method according to any one of claims 1 to 6, further comprising:
performing the measurement based on a specific reference signal, wherein the terminal does not support the first capability.

8. The method according to any one of claims 1 to 7, wherein the measurement based on the EMW is a measurement without a measurement gap.

9. A communication method, comprising:
receiving first information, wherein the first information indicates whether a terminal supports a first capability, and the first capability is a capability of performing a measurement based on an Effective Measurement Window (EMW).

10. The method according to claim 9, further comprising:
receiving second information, wherein the second information indicates that the terminal supports an NCSG capability.

11. The method according to claim 9 or 10, further comprising:
receiving third information, wherein the third information indicates that the terminal supports one of the following:
a measurement capability requiring neither a measurement gap nor NCSG; or
a measurement capability requiring NCSG.

12. The method according to any one of claims 9 to 11, further comprising:
sending fourth information, wherein the terminal supports the first capability, and the fourth information indicates a parameter of the EMW configured by a network device.

13. The method according to claim 12, wherein the parameter of the EMW comprises at least one of the following:
a periodicity of the EMW;
a duration of the EMW;
a time domain offset of the EMW.

14. The method according to any one of claims 9 to 13, further comprising:
not sending fourth information, wherein the terminal does not support the first capability, and the fourth information indicates a parameter of the EMW configured by a network device.

15. The method according to any one of claims 9 to 14, wherein the measurement based on the EMW and of the terminal is a measurement without a measurement gap.

16. A communication method, comprising:
sending, by a terminal to a network device, first information, wherein the first information indicates whether a terminal supports a first capability, and the first capability is a capability of performing a measurement based on an Effective Measurement Window (EMW); and
receiving, by the network device, the first information.

17. A terminal, comprising:
a transceiving module, configured to send first information, wherein the first information indicates whether a terminal supports a first capability, and the first capability is a capability of performing a measurement based on an Effective Measurement Window (EMW).

18. A network device, comprising:
a transceiving module, configured to receive first information, wherein the first information indicates whether a terminal supports a first capability, and the first capability is a capability of performing a measurement based on an Effective Measurement Window (EMW).

19. A terminal, comprising:
one or more processors;
wherein the terminal is configured to perform the communication method according to any one of claims 1 to 8.

20. A network device, comprising:
one or more processors;
wherein the network device is configured to perform the communication method according to any one of claims 9 to 15.

21. A communication system, comprising a terminal and a network device, wherein the terminal is configured to implement the communication method according to any one of claims 1 to 8, and the network device is configured to implement the communication method according to any one of claims 9 to 15.

22. A storage medium, wherein the storage medium stores instructions that, when operated on the communication device, cause the communication device to perform the method according to any one of claims 1 to 8, or the method according to any one of claims 9 to 15.
